# EUROPEAN PATENT APPLICATION

(11) **EP 4 811 075 A1**
(43) Date of publication of application: **23.09.2026**
(21) Application number: 25189327.7
(22) Date of filing: 14.07.2025
(51) Int. Cl.: G06F 1/16, G06F 3/04817, H04M 1/02, G03G 15/00

(54) **DISPLAY CONTROL SYSTEM, IMAGE PROCESSING APPARATUS, AND PROGRAM**

(30) Priority: 21.03.2025 JP 2025046634
(71) Applicant: FUJIFILM Business Innovation Corp., Minato-ku Tokyo (JP)
(72) Inventor: MIZUNO, Tomohiro, Yokohama-shi (JP); MINAMISAKO, Yuki, Yokohama-shi (JP); SEKINE, Yoshihiro, Yokohama-shi (JP); SAKAI, Yoshihide, Yokohama-shi (JP); HIROYA, Yui, Yokohama-shi (JP); CHEN, Aohan, Yokohama-shi (JP)
(74) Representative: Kurig, Thomas

(57) **Abstract**

A display control system includes a processor configured to, in a case where an operation button, which is created in advance to enable a function added to an apparatus having an operation screen to be used, is not possible to be displayed as it is on the operation screen, convert the operation button into a predetermined form, and display the operation button obtained after conversion on another operation screen to which a screen transition is made from the operation screen.

## Description

### BACKGROUND OF THE INVENTION

### (i) Field of the Invention

The present invention relates to a display control system, an image processing apparatus, and a program.

### (ii) Description of Related Art

In a case where a function is added to an apparatus used by a user, it is common that an operation button for enabling the added function is added to an operation screen, and a related technique is also known (for example, JP2011-114847A).

### SUMMARY OF THE INVENTION

However, some versions of the operation screen may not correspond to the design or the size of the operation button for enabling the added function to be used, so that it is not possible to display the operation button. In this case, the operation screen needs to be upgraded, but some users do not want to upgrade the operation screen for reasons such as operability and appearance.

An object of the present disclosure is to enable a function added to an apparatus to be used without upgrading an operation screen of the apparatus.

According to a first aspect of the present disclosure, there is provided a display control system including a processor configured to: in a case where an operation button, which is created in advance to enable a function added to an apparatus having an operation screen to be used, is not possible to be displayed as it is on the operation screen, convert the operation button into a predetermined form; and display the operation button obtained after conversion on another operation screen to which a screen transition is made from the operation screen.

According to a second aspect of the present disclosure, in the display control system according to the first aspect, the predetermined form may be a form according to a characteristic of the operation screen.

According to a third aspect of the present disclosure, in the display control system according to the second aspect, the characteristic of the operation screen may be a design of another operation button displayed on the operation screen or a size with respect to the operation screen.

According to a fourth aspect of the present disclosure, in the display control system according to any one of the first to third aspects, the predetermined form may be a form in which the added function is visually identifiable.

According to a fifth aspect of the present disclosure, in the display control system according to the fourth aspect, the visually identifiable form may be a text string representing content of the added function.

According to a sixth aspect of the present disclosure, in the display control system according to any one of the first to fifth aspects, the processor may be configured to: in a case where a predetermined operation is performed on the operation screen, display the other operation screen.

According to a seventh aspect of the present disclosure, in the display control system according to the sixth aspect, the predetermined operation may include an operation of scrolling the operation screen or an operation of pressing a predetermined operation button displayed on the operation screen.

According to an eighth aspect of the present disclosure, in the display control system according to any one of the first to seventh aspects, the processor may be configured to: display information indicating that the added function is present on the operation screen.

According to a ninth aspect of the present disclosure, in the display control system according to the eighth aspect, the processor may be configured to: display, as the information indicating that the added function is present, the number of added functions of which the operation button obtained after conversion has never been displayed on the other operation screen, on the operation screen.

According to a tenth aspect of the present disclosure, in the display control system according to any one of the first to ninth aspects, the processor may be configured to: in a case where the operation button is not possible to be displayed as it is because a version of the operation screen does not correspond to the operation button, convert the operation button into the predetermined form.

According to an eleventh aspect of the present disclosure, in the display control system according to the tenth aspect, the version may be a version selected by a user.

According to a twelfth aspect of the present disclosure, there is provided an image processing apparatus including a processor configured to: in a case where an operation button, which is created in advance to enable a function added to the image processing apparatus to be used, is not possible to be displayed as it is on an operation screen, convert the operation button into a predetermined form; and display the operation button obtained after conversion on another operation screen to which a screen transition is made from the operation screen.

According to a thirteenth aspect of the present disclosure, there is provided a program executed by a computer, the program causing the computer to realize: a function of, in a case where an operation button, which is created in advance to enable a function added to an apparatus having an operation screen to be used, is not possible to be displayed as it is on the operation screen, converting the operation button into a predetermined form; and a function of displaying the operation button obtained after conversion on another operation screen to which a screen transition is made from the operation screen.

According to the first aspect of the present invention, the user can use the function added to the apparatus without upgrading the operation screen for operating the apparatus.

According to the second aspect of the present invention, the operation button converted into the form according to the preference of the user is displayed.

According to the third aspect of the present invention, the operation button converted into the design and the size according to the preference of the user is displayed.

According to the fourth aspect of the present invention, the user can identify the added function at a glance from the displayed operation button obtained after conversion.

According to the fifth aspect of the present invention, the user can perceive the content of the added function at a glance from the displayed operation button obtained after conversion.

According to the sixth aspect of the present invention, the user can display the operation button for enabling the added function to be used by performing the predetermined operation on the operation screen.

According to the seventh aspect of the present invention, the user can display the operation button for enabling the added function by performing an operation of scrolling the operation screen or an operation of pressing the predetermined operation button displayed on the operation screen.

According to the eighth aspect of the present invention, the user can perceive whether or not a new function is added by merely viewing the operation screen.

According to the ninth aspect of the present invention, the user can perceive the number of newly added functions from the numbers displayed on the operation screen.

According to the tenth aspect of the present invention, the user can use the function added to the apparatus without upgrading the operation screen for operating the apparatus.

According to the eleventh aspect of the present invention, the user can use the function added to the apparatus even in a case where the user changes the version of the operation screen of the apparatus to the version according to the preference of the user.

According to the twelfth aspect of the present invention, the user can use the function added to the apparatus without upgrading the operation screen for operating the apparatus.

According to the thirteenth aspect of the present invention, the user can use the function added to the apparatus without upgrading the operation screen for operating the apparatus.

### BRIEF DESCRIPTION OF THE DRAWINGS

Exemplary embodiment(s) of the present invention will be described in detail based on the following figures, wherein:
FIG. 1 is a diagram illustrating an example of an overall configuration of a display control system to which a present exemplary embodiment is applied;
FIG. 2 is a diagram illustrating an example of a hardware configuration of an image processing apparatus to which the present exemplary embodiment is applied;
FIG. 3 is a diagram illustrating an example of a hardware configuration of a management server in FIG. 1;
FIG. 4 is a diagram illustrating an example of a functional configuration of a control unit of the image processing apparatus;
FIG. 5 is a diagram illustrating an example of a functional configuration of a control unit of the management server;
FIG. 6 is a flowchart illustrating an example of a flow until a new function button is displayed on a second operation screen in a process of the image processing apparatus;
FIG. 7 is a diagram illustrating a specific example of a case where a new function button cannot be displayed as it is because a version of a first operation screen displayed on the image processing apparatus is old and does not correspond to the new function button; and
FIG. 8A is a diagram illustrating a specific example of the first operation screen displayed on the image processing apparatus, and FIG. 8B is a diagram illustrating a specific example of the second operation screen displayed on the image processing apparatus.

### DETAILED DESCRIPTION OF THE INVENTION

Hereinafter, exemplary embodiments of the present invention will be described in detail with reference to the accompanying drawings.

### <Configuration of Display Control System 1>

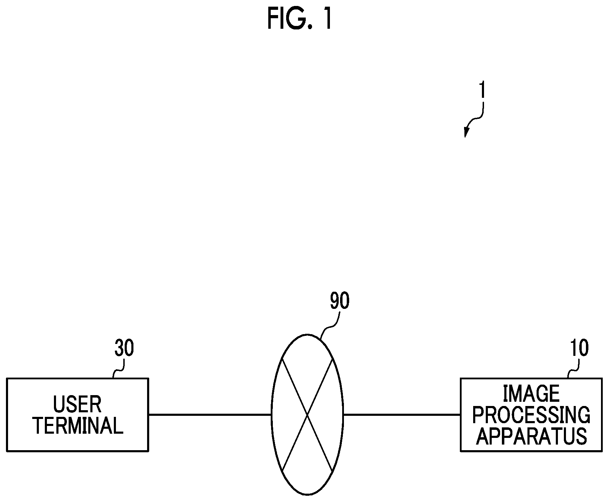

FIG. 1 is a diagram illustrating an example of an overall configuration of a display control system 1 to which the present exemplary embodiment is applied.

The display control system 1 is a system that enables a function added to the apparatus to be used without upgrading an operation screen for operating the apparatus. The display control system 1 is configured by connecting the image processing apparatus 10 and the management server 30 via a network 90. The network 90 is, for example, a local area network (LAN) or the Internet.

### [Image Processing Apparatus 10]

The image processing apparatus 10 performs various types of processes according to an input operation of a user who uses the display control system 1. For example, the image processing apparatus 10 can execute a printing process of forming and outputting an image on paper or the like as a recording medium, a copying process of copying and outputting an image of an original document on paper or the like, a reading process of reading an image formed on paper or the like, a process of transmitting an original document by a facsimile, and the like. The image processing apparatus 10 includes, for example, a so-called electrophotographic type multifunction machine that forms a toner image on a printing surface of paper and a so-called inkjet type printer that discharges ink onto a printing surface of paper.

The image processing apparatus 10 has an operation screen as a user interface, and can acquire input information input to the operation screen and execute various types of processes. In addition, the image processing apparatus 10 can acquire various types of information transmitted from a management server 30 connected to the image processing apparatus 10 via the network 90 and from the outside, and execute various types of processes. In addition, the image processing apparatus 10 can transmit various types of information to the management server 30 and the outside.

For example, the image processing apparatus 10 can store and manage information related to a user who operates the image processing apparatus 10 (hereinafter, referred to as "user information"). The user information includes, for example, information that can uniquely specify the user and information on the operation screen customized for each user. In addition, the image processing apparatus 10 performs the following process in a case where a newly created operation button (hereinafter, referred to as a "new function button"), which is newly created as a button for enabling a function added to the image processing apparatus 10 to be used, cannot be displayed on the operation screen as it is. That is, the image processing apparatus 10 converts the form of the created new function button into a predetermined form, and displays the new function button obtained after conversion on another operation screen (hereinafter, referred to as a "second operation screen") to which a screen transition is made from the main operation screen (hereinafter, referred to as a "first operation screen").

Here, the "case where the new function button cannot be displayed as it is" is, for example, a case where the new function button cannot be displayed as it is because the version of the first operation screen is old and does not correspond to the new function button. In this case, the version of the first operation screen may be a version selected based on the preference of the user. In addition, the "predetermined form" is, for example, a form in which a function added to the image processing apparatus 10 can be visually identifiable.

In a case where a predetermined operation is performed on the first operation screen, the image processing apparatus 10 displays the second operation screen. Here, the "predetermined operation" is, for example, an operation of scrolling the first operation screen, an operation of pressing an operation button (hereinafter, referred to as a "screen transition button") predetermined as a button for displaying the second operation screen, which is displayed on the first operation screen, and the like.

The image processing apparatus 10 displays information indicating that a function added to the image processing apparatus 10 is present on the first operation screen. For example, the image processing apparatus 10 can display, on the first operation screen, the number of new function buttons after conversion that are not yet displayed on the second operation screen among the functions added to the image processing apparatus 10 as the "information indicating that the function added to the image processing apparatus 10 is present". The details of configuration and process of the image processing apparatus 10 will be described later.

### [Management Server 30]

The management server 30 is an information processing apparatus as a server that manages the entire display control system 1. The management server 30 can transmit various types of information to the image processing apparatus 10 and the outside and cause the image processing apparatus 10 to execute various types of processes. Further, the management server 30 can acquire various types of information transmitted from the image processing apparatus 10 and the outside and perform various types of processes.

For example, the management server 30 can have a part or all of the above-described functions of the image processing apparatus 10. The management server 30 may have, for example, a function of storing and managing user information among the above-described functions of the image processing apparatus 10. In this case, the image processing apparatus 10 receives the provision of the user information from the management server 30 as necessary, and uses the user information for various types of processes. For example, the image processing apparatus 10 performs the above-described various types of processes by using the information on the operation screen customized for each user among the user information. As a result, the processing load of the image processing apparatus 10 is reduced as compared to a case where the image processing apparatus 10 manages the user information alone. The user information may be stored in at least one of the image processing apparatus 10 or the management server 30.

The above-described configuration of the display control system 1 is an example, and the display control system 1 may have a function of realizing the above-described processes as a whole. Therefore, among the functions that realize the above-described processes, a part or all of the functions may be shared or may cooperate with each other in the display control system 1. That is, as described above, a part or all of the functions of the image processing apparatus 10 configuring the display control system 1 may be used as the functions of another information processing apparatus (for example, the management server 30). In addition, a part or all of the function of another information processing apparatus may be used as the function of the image processing apparatus 10. Further, a part or all of the functions of the image processing apparatus 10 or other apparatuses which configure the display control system 1 may be transferred to another server (not illustrated). As a result, the processing of the display control system 1 as a whole may be accelerated, and, in addition the processing can be complemented.

### <Hardware Configuration>

### [Hardware Configuration of Image Processing Apparatus 10]

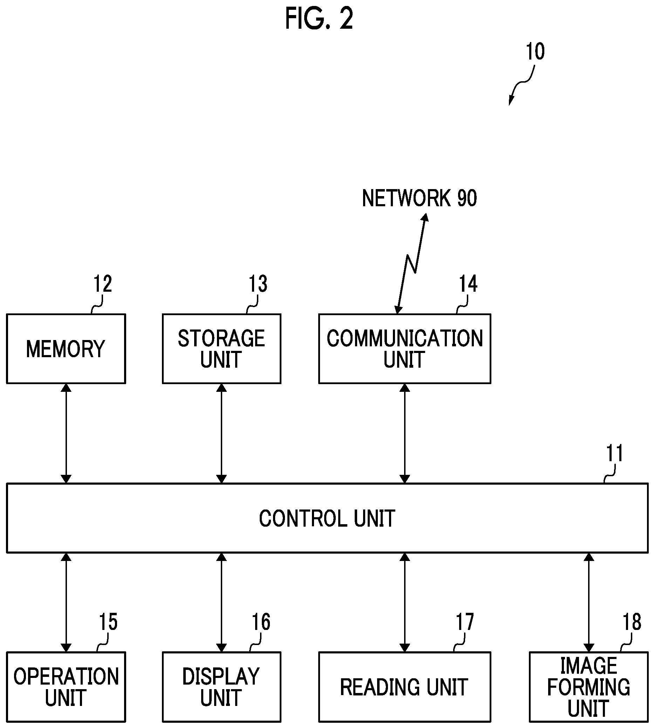

FIG. 2 is a diagram illustrating an example of a hardware configuration of the image processing apparatus 10 to which the present exemplary embodiment is applied.

The image processing apparatus 10 includes a control unit 11, a memory 12, a storage unit 13, a communication unit 14, an operation unit 15, a display unit 16, a reading unit 17, and an image forming unit 18. The above units are connected to each other via a data bus, an address bus, a Peripheral Component Interconnect (PCI) bus, or the like.

The control unit 11 is a processor that controls functions of the image processing apparatus 10 based on execution of various types of software such as an OS (basic software) and application software.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other.

The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The memory 12 is a storage region in which various types of software, pieces of data used for executing the software, or the like are stored, and is used as a work area in calculations. The memory 12 is configured of, for example, a random access memory (RAM).

The storage unit 13 is a storage region in which input data for various types of software, output data from various types of software, or the like are stored. The storage unit 13 is configured of, for example, a hard disk drive (HDD), a solid state drive (SSD), or a semiconductor memory, which is used for storing programs, various types of setting data, or the like. The storage unit 13 is provided with a database that stores various types of information.

The communication unit 14 transmits and receives data between the management server 30 and an outside via the network 90. The operation unit 15 is configured of, for example, a keyboard, a mouse, a mechanical button, or a switch, and receives an input operation.

The operation unit 15 also includes a touch sensor integrally configuring a touch panel with the display unit 16.

The display unit 16 is configured of, for example, a liquid crystal display or an organic electroluminescence (EL) display to be used for information display, and displays data of an image or a text and the like. The display unit 16 displays a user interface or the like.

The reading unit 17 reads an image recorded on a medium such as paper. The reading unit 17 may be configured of, for example, a CCD (Charge Coupled Devices) type scanner that reduces reflected light with respect to light emitted from a light source to an original document with a lens and receives the reflected light with a CCD. In addition, the reading unit 17 may be configured of a contact image sensor (CIS) type scanner or the like that receives reflected light with a CIS with respect to light emitted in order from an LED light source to an original document.

The image forming unit 18 forms an image to be printed on a printing surface of paper as a recording medium by, for example, an electrophotographic method, an inkjet method, or the like.

### [Hardware Configuration of Management Server 30]

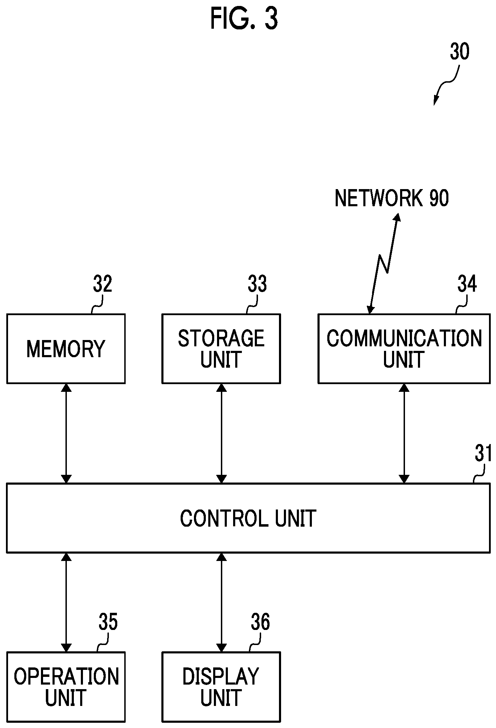

FIG. 3 is a diagram illustrating an example of a hardware configuration of the management server 30 in FIG. 1.

The management server 30 includes a control unit 31, a memory 32, a storage unit 33, a communication unit 34, an operation unit 35, and a display unit 36 respectively corresponding to the control unit 11, the memory 12, the storage unit 13, the communication unit 14, the operation unit 15, and the display unit 16 illustrated in FIG. 2. These units are connected to each other via a data bus, an address bus, a PCI bus, or the like.

### <Functional Configuration>

### [Functional Configuration of Image Processing Apparatus 10]

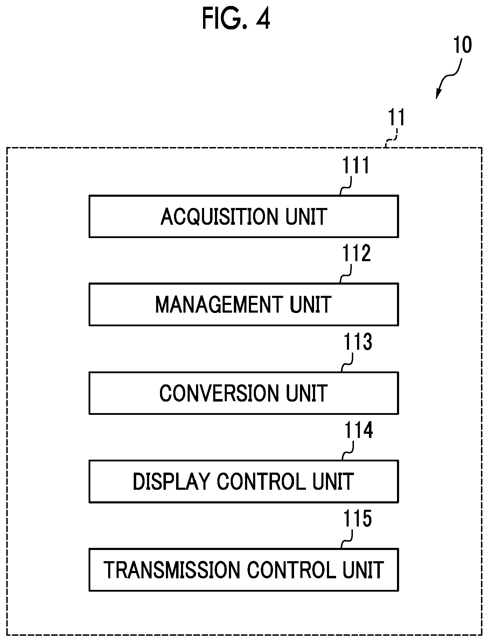

FIG. 4 is a diagram illustrating an example of a functional configuration of the control unit 11 of the image processing apparatus 10.

In the control unit 11 of the image processing apparatus 10, an acquisition unit 111, a management unit 112, a conversion unit 113, a display control unit 114, and a transmission control unit 115 function.

The acquisition unit 111 acquires various types of information. For example, the acquisition unit 111 acquires the user information provided from the management server 30. In addition, the acquisition unit 111 acquires the input information input to the first operation screen and the second operation screen.

The management unit 112 stores and manages various types of information in the database of the storage unit 13 (see FIG. 2). For example, the management unit 112 stores and manages the user information acquired by the acquisition unit 111 in the database. The management unit 112 manages the input information acquired by the acquisition unit 111 in association with the user information.

The conversion unit 113 converts the form of the newly created new function button into the predetermined form. For example, the conversion unit 113 converts the function added to the image processing apparatus 10 into a visually identifiable form as the predetermined form. Here, the "visually identifiable form" is, for example, a form in which a text string representing the content of the function added to the image processing apparatus 10 is described.

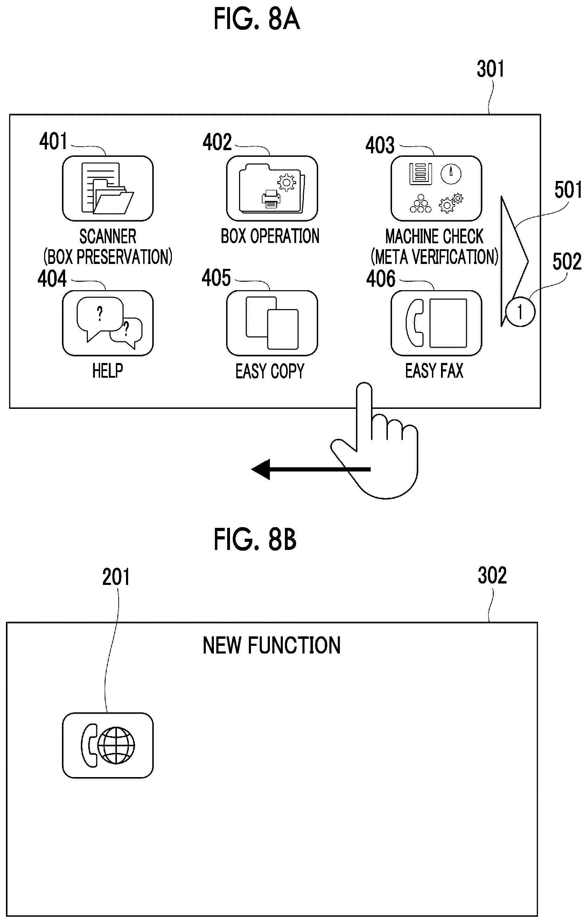

Specifically, for example, the conversion unit 113 can convert the form of the created new function button into a form according to the characteristic of the first operation screen. Here, the "characteristic of the operation screen" is, for example, a design of another operation button displayed on the first operation screen, a size of another operation button displayed on the first operation screen with respect to the first operation screen, or the like. A specific example of the other operation button displayed on the first operation screen will be described later with reference to FIG. 8B.

The display control unit 114 performs control to display the first operation screen and the second operation screen on the display unit 16 (see FIG. 2). In addition, the display control unit 114 performs control to display a new function button on the first operation screen. In addition, the display control unit 114 performs control to display the screen transition button on the first operation screen. In addition, the display control unit 114 performs control to display the number of new function buttons obtained after conversion, which are not displayed on the second operation screen, on the first operation screen, among the functions added to the image processing apparatus.

The transmission control unit 115 performs control to transmit various types of information to the management server 30 and the outside via the communication unit 14 (see FIG. 2). For example, the transmission control unit 115 performs control to transmit the input information input to the first operation screen and the second operation screen toward the management server 30.

### [Functional Configuration of Management Server 30]

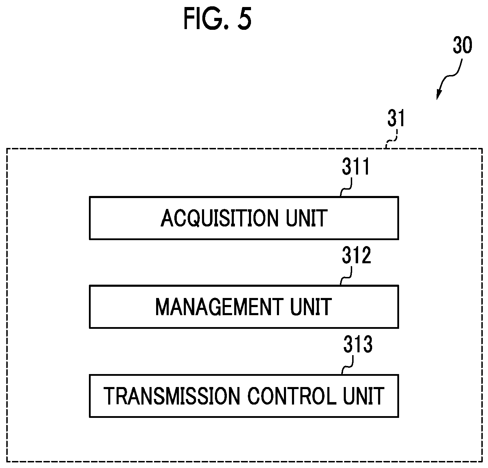

FIG. 5 is a diagram illustrating an example of a functional configuration of the control unit 31 of the management server 30.

In the control unit 31 of the management server 30, an acquisition unit 311, a management unit 312, and a transmission control unit 313 function.

The acquisition unit 311 acquires various types of information. For example, the acquisition unit 311 acquires the input information transmitted from the image processing apparatus 10.

The management unit 312 stores and manages various types of information in the database of the storage unit 33 (see FIG. 3). For example, the management unit 312 stores and manages the user information acquired by the acquisition unit 311 in the database of the storage unit 33.

The transmission control unit 313 performs control to transmit various types of information to the image processing apparatus 10 and the outside via the communication unit 34 (see FIG. 3). For example, the transmission control unit 313 performs control to transmit the user information managed by the management unit 312 toward the image processing apparatus 10.

### <Flow of Process of Image Processing Apparatus 10>

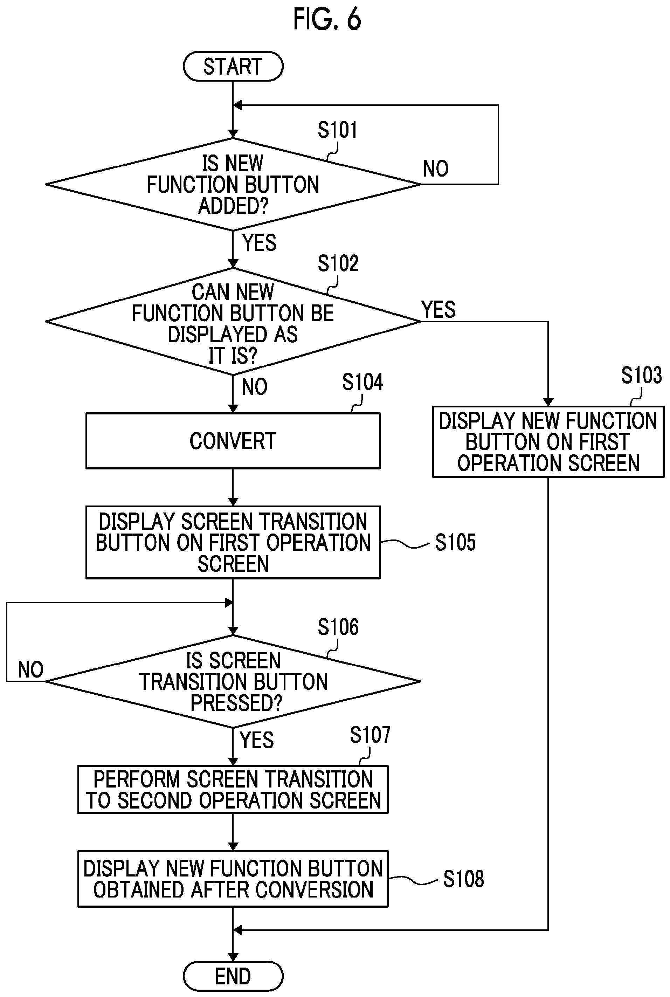

FIG. 6 is a flowchart illustrating an example of a flow until a new function button is displayed on the second operation screen in the process of the image processing apparatus 10. FIG. 6 illustrates an example in which the screen transition button is pressed as a "predetermined operation" for transitioning the first operation screen to the second operation screen.

In a case where a new function button is added to the image processing apparatus 10 by adding a new function to the image processing apparatus 10 (YES in step S101), the process proceeds to a determination process in step S102. On the other hand, in a case where the new function button is not added (NO in step S101), the image processing apparatus 10 repeats the determination process in step S101.

In a case where the new function button can be displayed as it is on the first operation screen (YES in step S102), the image processing apparatus 10 displays the new function button on the first operation screen (step S103), and ends the process (END). On the other hand, in a case where the new function button cannot be displayed as it is on the first operation screen (NO in step S102), the image processing apparatus 10 converts the form of the new function button into the predetermined form (step S104), and proceeds to the process of step S105.

The image processing apparatus 10 displays the screen transition button on the first operation screen (step S105). At this time, the image processing apparatus 10 may display the number of new function buttons after conversion which are not yet displayed on the second operation screen among the added functions. In a case where the screen transition button of the first operation screen is pressed (YES in step S106), the image processing apparatus 10 causes the screen to transition from the first operation screen to the second operation screen (step S107). The image processing apparatus 10 displays the new function button after conversion on the second operation screen (step S108), and ends the process (END). On the other hand, in a case where the screen transition button of the first operation screen is not pressed (NO in step S106), the image processing apparatus 10 repeats a determination process in step S106.

### <Specific Example>

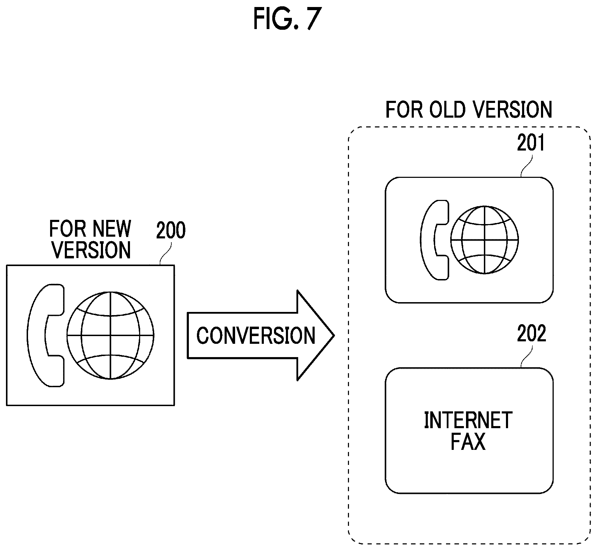

FIG. 7 is a diagram illustrating a specific example of a case where the new function button cannot be displayed as it is because the version of the first operation screen displayed on the image processing apparatus 10 is old and does not correspond to the new function button.

On the left side of FIG. 7, a new function button 200 newly created as a button for enabling the use of an Internet facsimile (hereinafter, referred to as "Internet FAX") which is a new function added to the image processing apparatus 10 (refer to FIG. 1) is illustrated. Here, as described as "for new version" in FIG. 7, it is assumed that the new function button 200 cannot be displayed as it is on the first operation screen of the old version.

In this case, the image processing apparatus 10 converts the aspect of the newly created new function button 200 into the predetermined form. On the right side of FIG. 7, two examples, in which the function added to the image processing apparatus 10 is converted into a visually identifiable form as the predetermined form, are illustrated. Specifically, a new function button 201 in which the design such as the size and the color of the new function button 200 is changed for the old version, and a new function button 202 in which a text "Internet FAX" is described as a text string representing the content of the function added to the image processing apparatus 10 are illustrated.

FIG. 8A is a diagram illustrating a specific example of the first operation screen 301 displayed on the image processing apparatus 10 (refer to FIG. 1). FIG. 8B is a diagram illustrating a specific example of the second operation screen 302 displayed on the image processing apparatus 10. FIGS. 8A and 8B illustrate an example when the new function button 201 obtained by converting the new function button 200 illustrated in FIG. 7 is displayed.

The first operation screen 301 illustrated in FIG. 8A is an operation screen of an old version selected based on a preference of the user. Operation buttons 401 to 406 are displayed on the first operation screen 301. Here, the new function button 200 illustrated in FIG. 7 described above has a different form such as the design or the size when being compared to the operation buttons 401 to 406 illustrated in FIG. 8A, and thus cannot be displayed as it is on the first operation screen 301.

Therefore, the image processing apparatus 10 converts the form of the new function button 200 illustrated in FIG. 7 into the form according to the characteristic of the first operation screen 301 illustrated in FIG. 8A. Here, for example, it is assumed that the image processing apparatus 10 converts the form of the new function button 200 into the form of the new function button 201 illustrated in FIG. 7. In this case, as illustrated in FIG. 8B, the new function button 201 after conversion is arranged on the second operation screen 302.

Then, in a case where a predetermined operation is performed on the first operation screen 301 illustrated in FIG. 8A, the second operation screen 302 illustrated in FIG. 8B is displayed. Specifically, in a case where an operation of scrolling the first operation screen 301 from right to left or an operation of pressing the screen transition button 501 is performed as a predetermined operation with respect to the first operation screen 301, the second operation screen 302 on which the new function button 201 is disposed is displayed.

Here, in a stage before the predetermined operation is performed, the number of new function buttons after conversion that are not yet displayed on the second operation screen 302 is displayed to be superimposed on the screen transition button 501 displayed on the first operation screen 301. In the example of FIG. 8A, the number "1" is displayed as the number 502 indicating the number of new function buttons after conversion that are not yet displayed on the second operation screen 302. The number 502 is reset by displaying the second operation screen 302 and is not displayed on the first operation screen 301. However, in a case where the new function button is newly created, the number 502 indicating the number of created function buttons is displayed again on the first operation screen 301.

### <Other Exemplary Embodiments>

While the present exemplary embodiments have been described above, the present invention is not limited to the exemplary embodiments. In addition, effects of the present invention are not limited to the effects disclosed in the exemplary embodiments. For example, the overall configuration of the display control system 1 illustrated in FIG. 1, the hardware configuration of the image processing apparatus 10 illustrated in FIG. 2, and the hardware configuration of the management server 30 illustrated in FIG. 3 are merely examples for achieving the object of the present invention, and are not particularly limited.

In addition, the functional configuration of the image processing apparatus 10 illustrated in FIG. 4 and the functional configuration of the management server 30 illustrated in FIG. 5 are merely examples and are not particularly limited. As long as the display control system 1 in FIG. 1 is provided with a function with which the above-described process can be executed as a whole, a functional configuration to be used to realize the function is not limited to the examples in FIGS. 4 and 5. Further, the order of the steps of the process of the image processing apparatus 10 illustrated in the flowchart of FIG. 6 is merely an example and is not particularly limited. Not only the processing is performed in time series along the illustrated order of the steps, but also the processing may not be performed in time series and may be parallelly or individually performed. Further, the specific examples illustrated in FIGS. 7 and 8 are merely examples, and are not particularly limited.

For example, in the above-described exemplary embodiment, the image processing apparatus 10 has been described as an example of an apparatus having an operation screen, but the present invention is not limited thereto. As long as the apparatus has an operation screen, for example, a personal computer, a tablet terminal, a smartphone, or the like, which is an information processing apparatus used by a user, a general office device, a home electric appliance, or the like may be used.

In addition, for example, the new function button 201 obtained by converting the new function button 200 of FIG. 7 is disposed on the second operation screen 302 illustrated in FIG. 8B, but the present invention is not limited thereto. For example, a new function button 202 on which the text "Internet FAX" is written may be disposed.

The present invention can also be applied to a program and a program product.

### (Supplementary Note)

(((1))) A display control system comprising:
   a processor configured to:
   in a case where an operation button, which is created in advance to enable a function added to an apparatus having an operation screen to be used, is not possible to be displayed as it is on the operation screen, convert the operation button into a predetermined form; and
   display the operation button obtained after conversion on another operation screen to which a screen transition is made from the operation screen.
(((2))) The display control system according to (((1))),
   wherein the predetermined form is a form according to a characteristic of the operation screen.
(((3))) The display control system according to (((2))),
   wherein the characteristic of the operation screen is a design of another operation button displayed on the operation screen or a size with respect to the operation screen.
(((4))) The display control system according to any one of (((1))) to (((3))),
   wherein the predetermined form is a form in which the added function is visually identifiable.
(((5))) The display control system according to (((4))),
   wherein the visually identifiable form is a text string representing content of the added function.
(6) The display control system according to any one of (((1))) to (((5))), wherein the processor is configured to:
   in a case where a predetermined operation is performed on the operation screen, display the other operation screen.
(((7))) The display control system according to (((6))),
   wherein the predetermined operation includes an operation of scrolling the operation screen or an operation of pressing a predetermined operation button displayed on the operation screen.
(((8))) The display control system according to any one of (((1))) to (((7))), wherein the processor is configured to:
   display information indicating that the added function is present on the operation screen.
(((9))) The display control system according to (((8))), wherein the processor is configured to:
   display, as the information indicating that the added function is present, the number of added functions of which the operation button obtained after conversion has never been displayed on the other operation screen, on the operation screen.
(((10))) The display control system according to any one of (((1))) to (((9))), wherein the processor is configured to:
   in a case where the operation button is not possible to be displayed as it is because a version of the operation screen does not correspond to the operation button, convert the operation button into the predetermined form.
(((11))) The display control system according to (((10))),
   wherein the version is a version selected by a user.
(((12))) An image processing apparatus comprising:
   a processor configured to:
   in a case where an operation button, which is created in advance to enable a function added to the image processing apparatus to be used, is not possible to be displayed as it is on an operation screen, convert the operation button into a predetermined form; and
   display the operation button obtained after conversion on another operation screen to which a screen transition is made from the operation screen.
(((13))) A program executed by a computer, the program causing the computer to realize:
   a function of, in a case where an operation button, which is created in advance to enable a function added to an apparatus having an operation screen to be used, is not possible to be displayed as it is on the operation screen, converting the operation button into a predetermined form; and
   a function of displaying the operation button obtained after conversion on another operation screen to which a screen transition is made from the operation screen.

According to (((1))), the user can use the function added to the apparatus without upgrading the operation screen for operating the apparatus.

According to (((2))), the operation button converted into the form according to the preference of the user is displayed.

According to (((3))), the operation button converted into the design and the size according to the preference of the user is displayed.

According to (((4))), the user can identify the added function at a glance from the displayed operation button obtained after conversion.

According to (((5))), the user can perceive the content of the added function at a glance from the displayed operation button obtained after conversion.

According to (((6))), the user can display the operation button for enabling the added function to be used by performing the predetermined operation on the operation screen.

According to (((7))), the user can display the operation button for enabling the added function by performing an operation of scrolling the operation screen or an operation of pressing the predetermined operation button displayed on the operation screen.

According to (((8))), the user can perceive whether or not a new function is added by merely viewing the operation screen.

According to (((9))), the user can perceive the number of newly added functions from the numbers displayed on the operation screen.

According to (((10))), the user can use the function added to the apparatus without upgrading the operation screen for operating the apparatus.

According to (((11))), the user can use the function added to the apparatus even in a case where the user changes the version of the operation screen of the apparatus to the version according to the preference of the user.

According to (((12))), the user can use the function added to the apparatus without upgrading the operation screen for operating the apparatus.

According to (((13))), the user can use the function added to the apparatus without upgrading the operation screen for operating the apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: display control system
10: image processing apparatus
11, 31: control unit
12, 32: memory
13, 33: storage unit
14, 34: communication unit
15, 35: operation unit
16, 36: display unit
17: reading unit
18: image forming unit
30: management server
90: network
111, 311: acquisition unit
112, 312: management unit
113: conversion unit
114: display control unit
115, 313: transmission control unit
200, 201, 202: new function button
301: first operation screen
302: second operation screen
501: screen transition button
502: number

## Claims

1. A display control system comprising:
a processor configured to:
in a case where an operation button, which is created in advance to enable a function added to an apparatus having an operation screen to be used, is not possible to be displayed as it is on the operation screen, convert the operation button into a predetermined form; and
display the operation button obtained after conversion on another operation screen to which a screen transition is made from the operation screen.

2. The display control system according to claim 1,
wherein the predetermined form is a form according to a characteristic of the operation screen.

3. The display control system according to claim 2,
wherein the characteristic of the operation screen is a design of another operation button displayed on the operation screen or a size with respect to the operation screen.

4. The display control system according to any one of claims 1 to 3,
wherein the predetermined form is a form in which the added function is visually identifiable.

5. The display control system according to claim 4,
wherein the visually identifiable form is a text string representing content of the added function.

6. The display control system according to any one of claims 1 to 5, wherein the processor is configured to:
in a case where a predetermined operation is performed on the operation screen, display the other operation screen.

7. The display control system according to claim 6,
wherein the predetermined operation includes an operation of scrolling the operation screen or an operation of pressing a predetermined operation button displayed on the operation screen.

8. The display control system according to any one of claims 1 to 7, wherein the processor is configured to:
display information indicating that the added function is present on the operation screen.

9. The display control system according to claim 8, wherein the processor is configured to:
display, as the information indicating that the added function is present, the number of added functions of which the operation button obtained after conversion has never been displayed on the other operation screen, on the operation screen.

10. The display control system according to any one of claims 1 to 9, wherein the processor is configured to:
in a case where the operation button is not possible to be displayed as it is because a version of the operation screen does not correspond to the operation button, convert the operation button into the predetermined form.

11. The display control system according to claim 10,
wherein the version is a version selected by a user.

12. An image processing apparatus comprising:
a processor configured to:
in a case where an operation button, which is created in advance to enable a function added to the image processing apparatus to be used, is not possible to be displayed as it is on an operation screen, convert the operation button into a predetermined form; and
display the operation button obtained after conversion on another operation screen to which a screen transition is made from the operation screen.

13. A program executed by a computer, the program causing the computer to realize:
a function of, in a case where an operation button, which is created in advance to enable a function added to an apparatus having an operation screen to be used, is not possible to be displayed as it is on the operation screen, converting the operation button into a predetermined form; and
a function of displaying the operation button obtained after conversion on another operation screen to which a screen transition is made from the operation screen.
